# EUROPEAN PATENT APPLICATION

(11) **EP 4 807 946 A1**
(43) Date of publication of application: **16.09.2026**
(21) Application number: 25170604.0
(22) Date of filing: 15.04.2025
(51) Int. Cl.: H02K 1/18, H02K 1/14, H02K 5/24, H02K 29/03

(54) **VIBRATION REDUCED STATOR FOR A COMPRESSOR MOTOR**

(30) Priority: 11.03.2025 TW 114108865
(71) Applicant: Rechi Precision Co., Ltd, 328 Taoyuan City (TW)
(72) Inventor: LUNG-YI, YEH, 328 Taoyuan City (TW)
(74) Representative: Lermer, Christoph

(57) **Abstract**

The outer stator (1) comprises a stator core (10) including teeth (105), grooves (106) and a shaft hole in a centre thereof. The outer contour of the stator core includes a plurality of arc segments (102) and a plurality of straight segments (103), wherein each of the arc segments (102) is adjacent to each two straight segments (102). Each straight segment (103) includes a recessed segment (104). All arc segments, straight segments and recessed segments extend in axial direction. One arc segment with two straight segments and the centre points of two adjacent recessed segments are forming a yoke region (A1,A2,A3). The outer diameter of the stator core is D and the thickness of the stator core being a lamination stack is T. Following condition is satisfied: 1.55 ≦ D/T ≦ 3.65 and D ≦ 126 mm. The arc lengths (X1,X2,X3) of different arc segments are not equal.

## Description

### BACKGROUND

### Technical Field

The present disclosure relates to a compressor, and in particular to a stator for compressor motors.

### Description of Related Art

As the market demand for energy efficiency in home power equipment (e.g., air conditioners, dehumidifiers, clothes dryers, etc.) increases, the type of compressors in such equipment is gradually shifting from fixed-speed compressors to variable-frequency compressors.

However, variable-frequency compressors are prone to greater noise at higher speeds, especially motor electromagnetic noise, which is caused by the electromagnetic force excitation of the motor stator resulting from the interaction of the stator magnetic field. When the stator mode frequency is close to the harmonic frequency of the electromagnetic force, resonance will be caused, which in turn result in an unusually high noise level, which adversely affects the user's experience. As the quality of modern life improves, the sensitivity of users to vibration noise increases, and the noise standards for compressors in air conditioners, dehumidifiers, clothes dryers, and other equipment are becoming more and more stringent in various countries. In order to reduce vibration noise, motor design usually optimizes the structural design of the rotor or stator to adjust the air gap harmonics or reduce the magnetic field strength, but this method often leads to performance degradation and has limited effect.

### SUMMARY

According to one aspect of the present disclosure, a stator for compressor motors is provided. The stator includes a stator core, the stator core includes a shaft hole in a center thereof. The shaft hole runs through both ends of the stator core. An outer contour of the stator core includes a plurality of arc segments and a plurality of straight segments, wherein each of the arc segments is adjacent to each two straight segments, each of the straight segments includes a recessed segment. The recessed segment extends along an axis of the stator core, an outer diameter of the stator core is D, and a stack thickness of the stator core is T, and the following condition is satisfied: 1.55 ≦ D/T ≦ 3.65, and D ≦ 126 mm; the arc segments are distributed on the same circumference, and the arc lengths of the arc segments are not exactly equal.

### BRIEF DESCRIPTION OF THE DRAWINGS

The present disclosure can be more fully understood by reading the following detailed description of the embodiment, with reference made to the accompanying drawings as follows:
Fig. 1 is a side view showing a stator according to one embodiment of the present disclosure;
Fig. 2 is a top view (I) showing a stator according to a first embodiment of the present disclosure;
Fig. 3 is a top view (II) showing the stator according to the first embodiment of the present disclosure;
Fig. 4 is a top view (I) showing a stator according to a second embodiment of the present disclosure; and

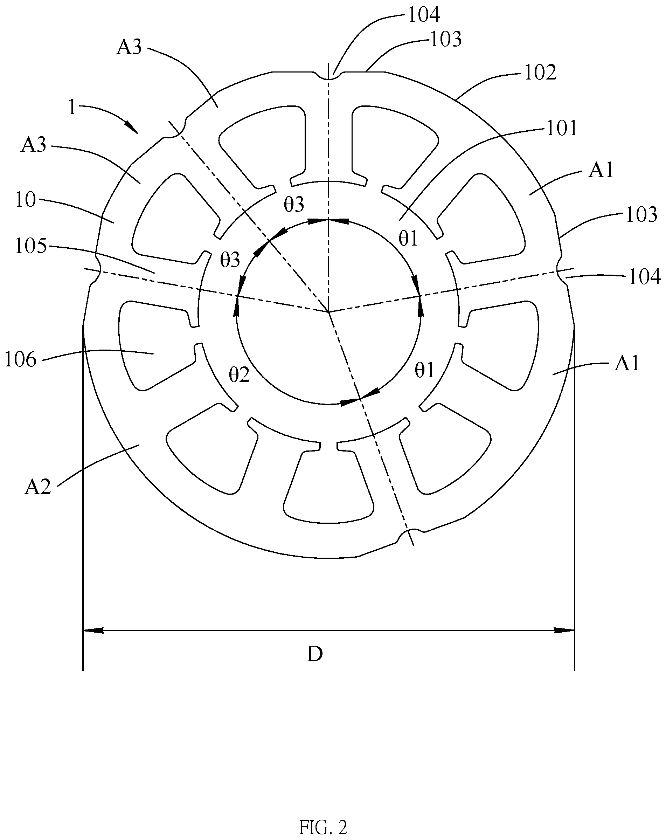

Fig. 2 is a top view (II) showing the stator according to the second embodiment of the present disclosure.

### DETAILED DESCRIPTION

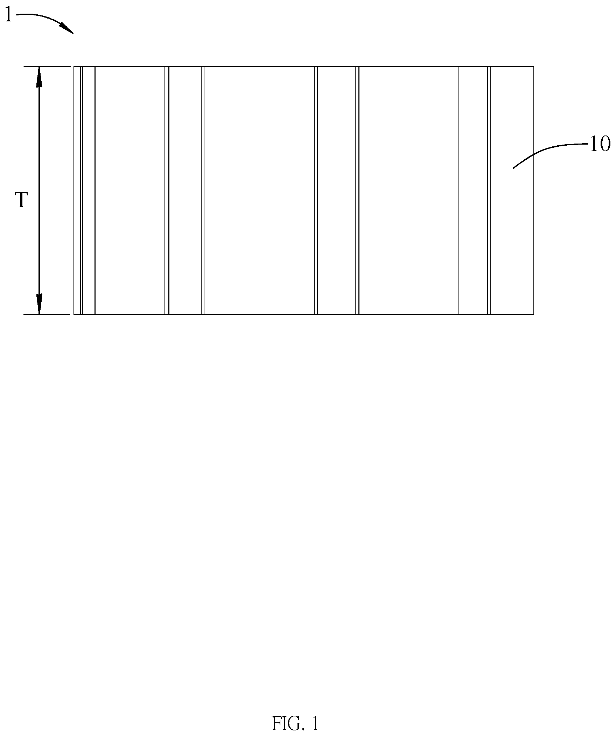

Please refer to Fig. 1, Fig. 2 and Fig. 3. The stator 1 includes a stator core 10. The stator core 10 is a cylinder with a predetermined length. A shaft hole 101 is located at the center of the stator core 10. The shaft hole 10 runs through the two ends of the stator core 10, and is used to accommodate a rotor (not shown in the drawings). The stator core 10 is made of a plurality of silicon steel sheets stamped by a high-precision stamping die and then sequentially overlapped from bottom to top to form the aforementioned cylinder to ensure excellent dimensional accuracy and magnetic properties. The center of each silicon steel sheet includes a bore, which is overlapped to form the aforementioned stator 1 and the shaft hole 101 incorporated with a rotor.

The outer contour of the stator core 10 includes a plurality of arc segments 102 and a plurality of straight segments 103. The arc segment 102 is adjacent to two straight segments 103 and form a continuous profile. Each of the straight segments 103 includes a recessed segment 104, which extends along an axis of the stator core 10 to achieve the effect of refrigerant flow of the compressor; wherein an outer diameter of the stator core 10 is D and a stack thickness of the stator core 10 is T, and the following condition is satisfied: 1.55 ≦ D/T ≦ 3.65 and D ≦ 126 mm. The arc segments 102 are distributed around the same circumference, and the arc lengths of the arc segments 102 are not exactly equal.

In other words, in the overall design of the structure, the ratio between the outer diameter D and the stack thickness T must satisfy the condition of 1.55 ≦ D/T ≦ 3.65, while the outer diameter D does not exceed 126 mm. In addition, the arc segments 102 are distributed on the same circumference, but the arc lengths thereof are not exactly equal, which demonstrates the fine tuning of geometry and functionality in the design. This structural design has a significant effect in enhancing the stability of the compressor motor and optimizing the electromagnetic properties, and can effectively suppress the transmission of shock waves in the stator, thereby reducing the low and medium frequency noise of the compressor motor. In addition, the structural design takes into account specific application requirements, making it particularly suitable for use in equipment such as rotary compressors, and the performance and usability can both be enhanced.

The various implementations of the stator core 10 are further described in the following paragraphs.

### [First Embodiment]

In this embodiment, the center points of the recessed segments 104 of the straight segments 103 on both sides of the arc segment 102 are formed an angle (θ1, θ2, θ3) with the center of the stator core 10, so that the stator core 10 is sequentially and circumferentially divided into two first stator yoke regions A1, one second stator yoke regions A2 and two third stator yoke portions A3 with the shaft hole 101 as a center. These regions are distributed in the circumferential direction according to a specific arrangement order, which is presented as: first stator yoke region A1, first stator yoke region A1, second stator yoke region A2, third stator yoke region A3, third stator yoke region A3. In addition, the designer may adjust the arrangement order of these regions according to the production or design requirements to adapt to different application requirements or design solutions.

In the embodiment, the angle of the first stator yoke region A1 is θ1, satisfying 70° ≦ θ1 ≦ 90°; the angle of the second stator yoke region A2 is θ2, satisfying 110° ≦ θ2 ≦ 130°; and the angle of the third stator yoke region A3 is θ3, satisfying 30° ≦ θ3 ≦ 50°. Specifically, in the structural design of the stator core 10, the range of the angles (θ1, θ2, θ3) of each stator yoke region is adjustable according to different functional requirements, where the angle θ1 of the first stator yoke region A1 is in the range of 70° to 90°, the angle θ2 of the second stator yoke region A2 is in the range of 110° to 130°, and the angle θ3 of the third stator yoke region A3 is in the range of 30° to 50°. The sum of these angles (θ1, θ2, θ3) must be equal to 360°. In addition, in other embodiments, the angle θ1 of the first stator yoke region A1, the angle θ2 of the second stator yoke region A2 and the angle θ3 of the third stator yoke region A3 described above may be adjusted and varied by the designer in accordance with the production or design requirements to satisfy the requirements of different applications, so as to ensure that the product is adapted to the diversified requirements of the use of the product and to optimize the performance objectives (as shown in Fig. 2).

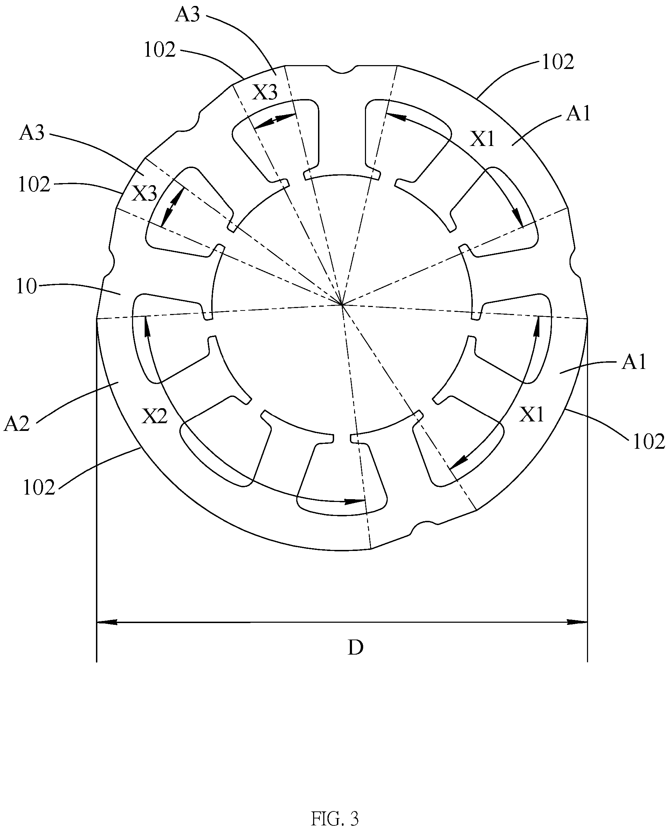

Furthermore, each of the two ends of the arc segment 102 of the first stator yoke region A1 form an angle X1 with the center of the stator core 10, satisfying 50° ≦ X1 ≦ 60°; each of the two ends of the arc segment 102 of the second stator yoke region A2 form an angle X2 with the center of the stator core 10, satisfying 90° ≦ X2 ≦ 100°; each of the two ends of the arc segment 102 of the third stator yoke region A3 form an angle X3 with the center of the stator core 10, satisfying 10° ≦ X3 ≦ 20°. Specifically, in the structural design of the stator core 10, the arc segments 102 of each yoke region form a specific range of angle with the center of the stator core 10 according to different functional requirements, where the arc segment 102 of the first stator yoke region A1 has an angle X1 in the range of 50° to 60°; the arc segment 102 of the second stator yoke region A2 has an angle X2 in the range of 90° to 100°; the arc segment 102 of the third stator yoke region A3 has an angle X3 in the range of 10° to 20°. In addition, the above mentioned angle X1 of the arc segment 102 of the first stator yoke region A1, the angle X2 of the arc segment 102 of the second stator yoke region A2 and the angle X3 of the arc segment 102 of the third stator yoke region A3 may be adjusted and varied in accordance with the production or design requirements to satisfy the requirements of different applications, so as to ensure that the product is adaptable to diversified usage requirements and performance optimization objectives (as shown in Fig. 3).

Furthermore, the stator structure 1 further includes a plurality of stator teeth 105, which are connected to the first stator yoke region A1, the second stator yoke region A2 and the third stator yoke region A3 of the stator core 10, and are located on an inner side thereof at intervals along the circumferential direction (i.e., the stator teeth 105 extend radially along the stator core 10). A stator groove 106 is located between each of the two adjacent stator teeth 105, and the number of the stator teeth 105 and the stator grooves 106 is the same. In the embodiment, the number of the stator teeth 105 and the stator slots 106 is at least four. In one example, the number of the stator grooves 106 in the drawings of the present disclosure is nine (i.e., a nine-groove stator 1). However, the number of the stator teeth 105 and the stator grooves 106 is not fixed, the designer may adjust the number of the stator teeth 105 and the stator grooves 106 to adapt to different design requirements.

In the aforementioned stator 1, the number of the stator teeth 105 and the stator grooves 106 is nine. Each of the first stator yoke region A1 is configured with two stator grooves 106, each of the second stator yoke region A2 is configured with three stator grooves 106 and each of the third stator yoke region A3 is configured with one stator groove 106. This kind of configuration demonstrates a reasonable distribution of the stator grooves 106 in each stator yoke region. At the same time, this design can be adjusted according to different demands, so as to adapt to different applications and design requirements.

In this embodiment, the angle X1 of the arc segment 102 of the first stator yoke region A1, the angle X2 of the arc segment 102 of the second stator yoke region A2, and the angle X3 of the arc segment 102 of the third stator yoke region A3 are different, so as to achieve the non-equal arc lengths of the arc segments 102 of each stator yoke region. Owing to this kind of asymmetric peripheral design (i.e., the adjustment of the stator peripheral shape is asymmetric), the mass and rigidity distribution can be changed to achieve the vibration mode reinforcement, so that the vibration noise suppression effect is better, and the intrinsic frequency of the stator is enhanced to avoid the vibration energy of the compressor motor operation being amplified by the structural resonance, so as to reduce the noise transmission.

### [Second Embodiment]

In this embodiment, the center points of the recessed segments 104 of the straight segments 103 on both sides of the arc segment 102 are formed an angle (θ1, θ2) with the center of the stator core 10, so that the stator core 10 is alternatively arranged and circumferentially divided into three first stator yoke regions A1 and three second stator yoke portions A2 with the shaft hole 101 as a center. Specifically, with the shaft hole 101 of the stator core 10 as a center, there are three first stator yoke regions A1 and three second stator yoke regions A2 in the circumferential direction. These regions are distributed in the circumferential direction according to a specific arrangement order, which is presented as: first stator yoke region A1, second stator yoke region A2, first stator yoke region A1, second stator yoke region A2, first stator yoke region A1, second stator yoke region A2. In addition, the designer may adjust the arrangement order of these regions according to the production or design requirements to adapt to different application requirements or design solutions.

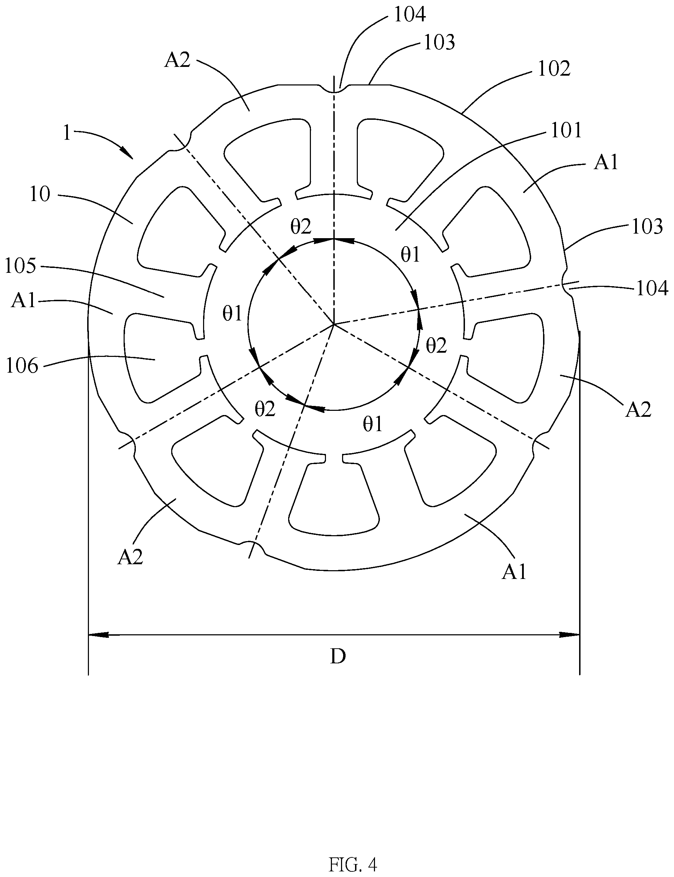

In the embodiment, the angle of the first stator yoke region A1 is θ1, satisfying 70° ≦ θ1 ≦ 90°; the angle of the second stator yoke region A2 is θ2, satisfying 30° ≦ θ3 ≦ 50°. Specifically, in the structural design of the stator core 10, the range of the angles (θ1, θ2) of each stator yoke region is adjustable according to different functional requirements, where the angle θ1 of the first stator yoke region A1 is in the range of 70° to 90°, the angle θ2 of the second stator yoke region A2 is in the range of 30° to 50°, and the sum of these angles (θ1, θ2) must be equal to 360°. In one example, the angle θ1 of the first stator yoke region A1 in this embodiment is 80°, and the angle θ2 of the second stator yoke region A2 in this embodiment is 40°. In addition, in other embodiments, the angle θ1 of the first stator yoke region A1, the angle θ2 of the second stator yoke region A2 described above may be adjusted and varied by the designer in accordance with the production or design requirements to satisfy the requirements of different applications, so as to ensure that the product is adapted to the diversified requirements of the use of the product and to optimize the performance objectives (as shown in Fig. 4).

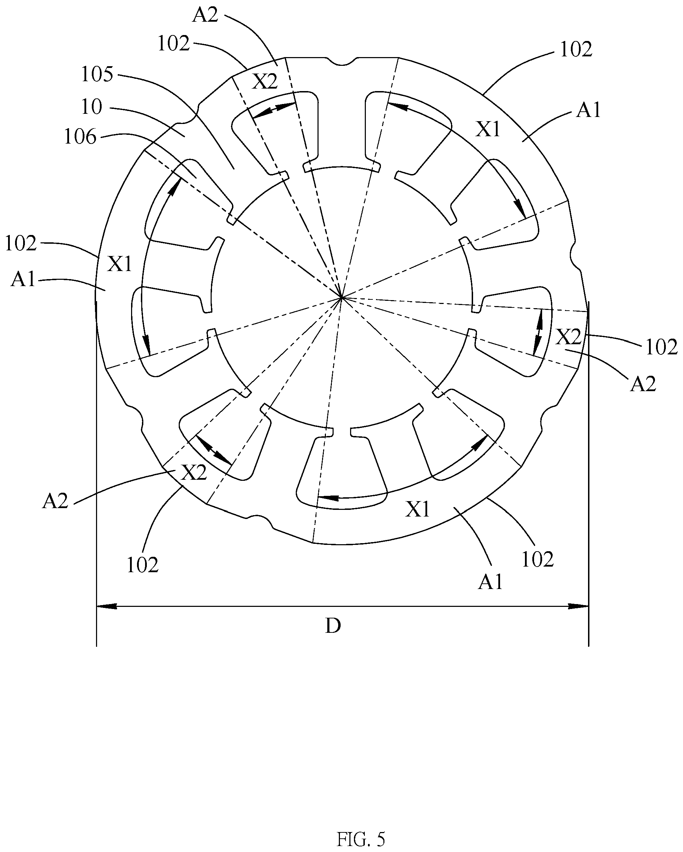

Furthermore, each of the two ends of the arc segment 102 of the first stator yoke region A1 forms an angle X1 with the center of the stator core 10, satisfying 50° ≦ X1 ≦ 60°; and each of the two ends of the arc segment 102 of the second stator yoke region A2 forms an angle X2 with the center of the stator core 10, satisfying 10° ≦ X2 ≦ 20°. Specifically, in the structural design of the stator core 10, the arc segments 102 of each yoke region form a specific range of angle with the center of the stator core 10 according to the functional requirements, where each of the arc segments 102 of the first stator yoke region A1 has an angle X1 ranging from 50° to 60°; and each of the arc segments 102 of the second stator yoke region A2 has an angle X2 ranging from 10° to 20°. In addition, in other embodiments, the above mentioned angle X1 of the arc segment 102 of the first stator yoke region A1 and the angle X2 of the arc segment 102 of the second stator yoke region A2 may be adjusted and varied by the designer in accordance with the production or design requirements to satisfy the requirements of different applications, so as to ensure that the product is adapted to the diversified requirements of the use of the product and the performance optimization objectives (as shown in Fig. 5).

Furthermore, the stator 1 further includes a plurality of stator teeth 105, the stator teeth 105 are connected to the first stator yoke region A1 and the second stator yoke region A2 of the stator core 10, and are disposed spaced apart in a circumferential direction on an inner side thereof (i.e., the stator teeth 105 extend radially along the stator core 10). A stator groove 106 is located between each of the two adjacent stator teeth 105, and the number of the stator teeth 105 and the stator grooves 106 is the same. In this embodiment, the number of the stator teeth 105 and stator grooves 106 is at least four. In one example, the number of stator grooves 106 in the present disclosure is nine (i.e., a nine-groove stator 1). However, the number of the stator teeth 105 and the stator grooves 106 is not fixed, and the designer may adjust the number of the stator teeth 105 and the stator grooves 106 to adapt to different design requirements.

In the aforementioned stator 1, the number of the stator teeth 105 and the stator grooves 106 is nine. In one example, each of the first stator yoke region A1 is configured with two stator grooves 106, and each of the second stator yoke region A2 is configured with one stator groove 106. This kind of configuration realizes a reasonable distribution of the stator grooves 106 in each stator yoke region. At the same time, this structural design can be adjusted according to different demands, so as to adapt to different applications and design requirements.

**In** this embodiment, each of the first stator yoke region A1 is configured with two stator grooves 106, and each of the second stator yoke region A2 is configured with one stator groove 106, and such a configuration realizes a reasonable distribution of the stator grooves 106 in each stator yoke region. In other words, a special groove number configuration is made, and the number of the symmetric stator grooves 106 is set to 1/3 of the total number of the stator grooves 106, so that the structure of each stator yoke region is more rigid to achieve an overall structural reinforcement and at the same time to achieve a vibration noise reduction effect. Therefore, this special configuration of the number of the stator grooves 106 not only enhances the electromagnetic properties and structural strength of the compressor motor, but also effectively reduces vibration and noise, thereby realizing better operational stability and durability and enhancing the overall operational stability.

In summary, through the aforementioned structural design, the natural frequency of the stator 1 can be improved, which can effectively inhibit the transmission of shock waves generated by the operation of the compressor motor, reduce the possibility of structural resonance, and further reduce the noise problem in the low and medium frequency range. This structural design not only reduces the sound interference during motor operation and improves the auditory experience, but also avoids the negative impact on the efficiency of the compressor motor due to the structural change. It is suitable for household equipment such as air conditioners, dehumidifiers, and clothes dryers, and meets the market demand for high-efficiency and low-noise products, which is of great significance in enhancing the competitiveness of the product in the market.

In order to effectively reduce the low and medium frequency noise of the compressor motor and to enhance the audibility, while maintaining the efficiency stability of the compressor motor, the present disclosure optimizes the design of the stator 1 with specific structural parameters and shape characteristics to enhance the natural frequency of the stator and to inhibit the transmission of shockwaves during operation. The outer diameter D of the stator core 10 is limited to not more than 126 mm, and the ratio of the outer diameter D to the stack thickness T of the stator core 10 should be 1.55 ≦ D/T ≦ 3.65, which is a range that ensures that the compressor motor has high operation stability, high rigidity and good structural characteristics.

Within the structural limitation, the stator 1 of the present disclosure adopts two possible design approaches to effectively increase the natural frequency of the stator of the compressor motor and reduce the vibration noise problem. In the first embodiment, the angles (θ1, θ2, θ3) of the arc segments 102 of the first stator yoke region A1, the second stator yoke region A2, and the third stator yoke region A3 are adjusted so that the arc lengths thereof are different, resulting in an asymmetric outer-edge design, which in turn alters the distribution of mass and stiffness, and achieves the reinforcement of the vibration modes, thus raising the intrinsic frequency of the stator, avoiding the magnitude of vibration energy due to the structural resonance of the compressor motor during operation, and reducing the noise transmission. In the second embodiment, by means of a special groove configuration, each of the first stator yoke region A1 is configured with two stator grooves 106, and each of the second stator yoke region A2 is configured with one stator groove 106, and the number of the symmetry stator grooves 106 is set to 1/3 of the total number of the stator grooves, so as to strengthen the structural rigidity of each stator yoke region, and to further strengthen the overall structure as well as to reduce the vibration and noise. Therefore, these two designs not only enhance the electromagnetic performance and structural strength of the compressor motor, but also effectively suppress vibration wave transmission during operation and reduce the low and medium frequency noise caused by structural resonance. This improved structural design effectively suppresses vibration and noise, and ensures the efficiency stability of the compressor motor, without affecting motor energy efficiency and output performance, thus realizing better operation quality.

The advantages of the present disclosure are as follows:
The stator is designed with specific structural parameters and shape characteristics to effectively improve the low and medium frequency noise of the compressor motor and enhance the audibility, while maintaining the efficiency stability of the compressor motor. The outer diameter of the stator core is not more than 126 mm, and the ratio of the outer diameter to the height of the stator core should be within the range of 1.55 ≦ D/T ≦ 3.65, where D is the outer diameter of the stator core and T is the stack thickness of the stator core. Under this structural limitation, the outer edge shape of the stator adopts an asymmetric design or the number of the symmetric stator grooves is set to 1/3 of the total number of the stator grooves, so as to effectively increase the natural frequency of the stator. Through the structural design, the natural frequency of the stator can be increased, which can effectively inhibit the transmission of shock waves generated by the operation of the compressor motor, reduce the possibility of structural resonance, and thus reduce the noise problem in the low and medium frequency ranges.

## Claims

1. A stator for compressor motors, comprising a stator core, the stator core comprises a shaft hole in a center thereof, the shaft hole runs through both ends of the stator core, **characterized in that**:
an outer contour of the stator core comprises a plurality of arc segments and a plurality of straight segments, wherein each of the arc segments is adjacent to each two straight segments, each of the straight segments comprises a recessed segment, the recessed segment extends along an axis of the stator core, an outer diameter of the stator core is D, and a stack thickness of the stator core is T, and the following condition is satisfied: 1.55 ≦ D/T ≦ 3.65, and D ≦ 126 mm; the arc segments are distributed on the same circumference, and the arc lengths of the arc segments are not exactly equal.

2. The stator of claim 1, **characterized in that** the centers of the recessed segments of the straight segments on both sides of the arc segments are formed an angle with the center of the stator core, so that the stator core is sequentially and circumferentially divided into two first stator yoke regions, one second stator yoke region and two third stator yoke regions with the shaft hole as a center.

3. The stator of claim 2, **characterized in that** an angle of the first stator yoke region is θ1, satisfying 70° ≦ θ1 ≦ 90°; an angle of the second stator yoke region is θ2, satisfying 110° ≦ θ2 ≦ 130°; an angle of the third stator yoke region is θ3, satisfying 30° ≦ θ3 ≦ 50°.

4. The stator of claim 2, **characterized in that** the two ends of the arc segment of each first stator yoke region form an angle X1 with the center of the stator core, satisfying 50° ≦ X1 ≦ 60°; the two ends of the arc segment of the second stator yoke region form an angle X2 with the center of the stator core, satisfying 90° ≦ X2 ≦ 100°; the two ends of the arc segment of each third stator yoke region form an angle X3 with the center of the stator core, satisfying 10° ≦ X3 ≦ 20°.

5. The stator of claim 3, **characterized in that** the stator further comprises a plurality of stator teeth, the stator teeth are connected to the first stator yoke portion, the second stator yoke portion and the third stator yoke portion of the stator core, and are located on an inner side of the stator core at intervals along the circumference thereof, and a stator groove is located between each two adjacent stator teeth.

6. The stator of claim 5, **characterized in that** a number of the stator teeth is nine and a number of the stator grooves is nine, each of the first stator yoke regions comprises two stator grooves, each of the second stator yoke regions comprises three stator grooves, and each of the third stator yoke regions comprises one stator groove.

7. The stator of claim 1, **characterized in that** the centers of the recessed segments of the straight segments on both sides of the arc segments are formed an angle with the center of the stator core, so that the stator core is divided into three first stator yoke regions and three second stator yoke regions with the shaft hole as a center, wherein the first stator yoke regions and the second stator yoke regions are arranged alternately along a circumferential direction.

8. The stator of claim 7, **characterized in that** an angle of the first stator yoke region is θ1, satisfying 70° ≦ θ1 ≦ 90°; an angle of the second stator yoke region is θ2, satisfying 30° ≦ θ2 ≦ 50°.

9. The stator of claim 7, **characterized in that** two ends of the arc segment of the first stator yoke region form an angle X1 with the center of the stator core, satisfying 50° ≦ X1 ≦ 60°; two ends of the arc segment of the second stator yoke region form an angle X2 with the center of the stator core, satisfying 10° ≦ X2 ≦ 20°.

10. The stator of claim 8, **characterized in that** the stator further comprises a plurality of stator teeth, the stator teeth are connected to the first stator yoke portion and the second stator yoke portion of the stator core, and are located on an inner side of the stator core at intervals along a circumference thereof, and a stator groove is located between each two adjacent stator teeth.

11. The stator of claim 10, **characterized in that** a number of the stator teeth is nine and a number of the stator grooves is nine, each of the first stator yoke regions comprises two stator grooves, and each of the second stator yoke regions comprises one stator groove.
